# FASCICULE DE BREVET EUROPEEN

(11) **EP 0 945 703 B1**
(45) Date de publication et mention de la délivrance du brevet: **18.01.2006**
(21) Numéro de dépôt: 99400643.5
(22) Date de dépôt: 16.03.1999
(51) Int. Cl.: G01B 3/00, G01D 5/04, F15B 15/28

(54) **Capteur de course partielle**
Partieller Hubsensor
Partial stroke detector

(30) Priorité: 23.03.1998 FR 9803518
(43) Date de publication de la demande: 29.09.1999
(73) Titulaire: Bosch Systemes de Freinage, 93700 Drancy (FR)
(72) Inventeur: Quirant, Werner, 93390 Clichy-sous-Bois (FR); Bourlon, Philippe, 77230 Dammartin en Goele (FR)

(56) Documents cités:
- EP-A- 0 278 753
- EP-A- 0 308 945
- GB-A- 2 314 139

## Description

La présente invention concerne les capteurs de déplacement, notamment utilisables pour mesurer la course utile d'un organe d'actionnement d'un circuit de freinage d'un véhicule automobile.

Plus précisément, la présente invention concerne un capteur de déplacement du type de ceux qui sont propres à mesurer une course utile effectuée par une pièce mobile en translation entre une première position longitudinale correspondant à une première extrémité de la course utile, et une position longitudinale extrême éloignée de la première position longitudinale suivant une première direction axiale et située au-delà d'une seconde position longitudinale qui correspond à une seconde extrémité de la course utile.

Bien que la technique actuelle offre de très nombreuses solutions pour mesurer des courses d'amplitude limitée, la mesure de la course utile d'une pièce susceptible de se déplacer sur une course plus importante que cette course utile pose le problème qui consiste à débrayer la liaison établie entre le capteur de la pièce mobile pour éviter d'endommager le capteur ou de bloquer la pièce à la fin de sa course utile.

La présente invention se situe dans ce contexte et a pour but de proposer un capteur résolvant ce problème de façon simple.

A cette fin, le capteur de l'invention, qui répond à la définition générique énoncée dans le préambule ci-dessus, est essentiellement caractérisé en ce qu'il comprend : un capteur de débattement angulaire portant un arbre de mesure pivotant autour d'un axe de rotation sensiblement perpendiculaire à la première direction axiale, ce capteur de débattement angulaire étant propre à mesurer un angle dont a pivoté l'arbre de mesure depuis une première position angulaire jusqu'à une seconde position angulaire éloignée de la première suivant un premier sens de rotation; une manivelle rendue solidaire en rotation de l'arbre de mesure pour pouvoir pivoter autour de l'axe de rotation, cette manivelle comportant un maneton distant de l'axe de rotation et parallèle à lui; et une came de guidage courbe, fixe par rapport à la pièce mobile et dans laquelle le maneton est engagé à coulissement, le maneton se trouvant en des premier et second points de la came lorsque la pièce mobile est respectivement dans ses première et seconde positions longitudinales, et la came se prolongeant parallèlement à la première direction axiale, au delà de son deuxième point par rapport au premier, au moins jusqu'en un point extrême qu'occupe le maneton lorsque la pièce mobile adopte sa position longitudinale extrême.

D'autres caractéristiques et avantages de l'invention ressortiront clairement de la description qui en est faite ci-après, à titre indicatif et nullement limitatif, en référence aux dessins, dans lesquels :

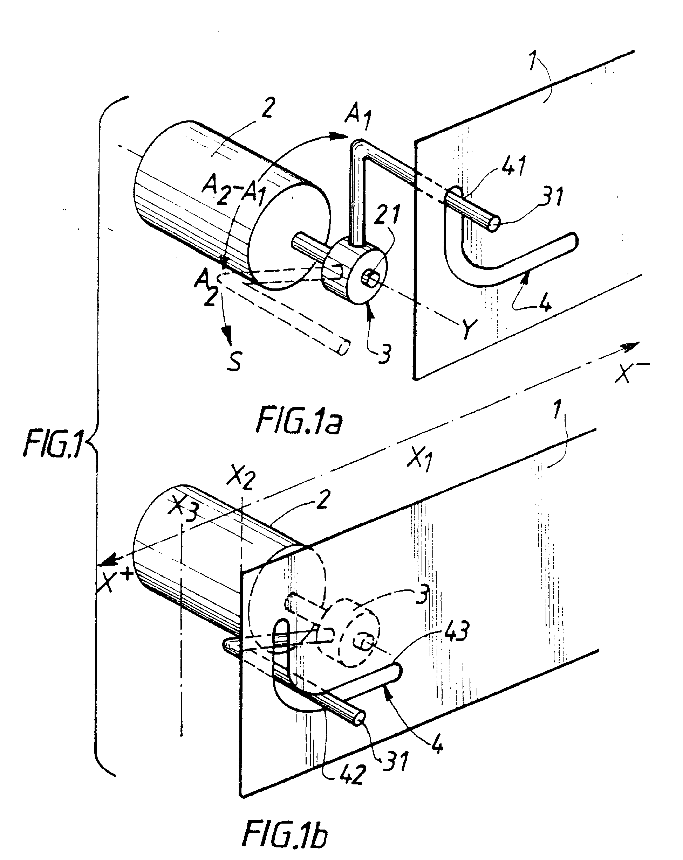

- la Figure 1, constituée des figures 1A et 1B, illustre de façon schématique et en perspective un capteur conforme à la présente invention pour deux positions de la pièce mobile; et
- la Figure 2 est une vue écorchée en perspective d'un mode de réalisation concret d'un capteur conforme à la présente invention.

L'invention concerne un capteur de déplacement destiné à mesurer la course utile d'une pièce mobile 1 qui est susceptible de se translater entre une position longitudinale de départ X1, correspondant au début de la course utile, et une position longitudinale extrême X3, éloignée de la première position longitudinale X1 suivant la direction axiale de translation aller X+.

En réalité, la course utile de la pièce mobile 1 ne s'étend que de la position longitudinale de départ X1 jusqu'à la position longitudinale notée X2, qui correspond à la fin de la course utile, et qui se situe entre les positions X1 et X3.

L'invention vise donc à réaliser un capteur de déplacement qui soit fonctionnel sur toute la course utile de la pièce mobile, c'est-à-dire entre les positions X1 et X2 de cette pièce, mais qui soit inactif en dehors de cette course utile, c'est-à-dire pour les positions de la pièce mobile comprises entre X2 et X3.

A cette fin, le capteur de l'invention comprend essentiellement un capteur de débattement angulaire 2, une manivelle 3, et une came de guidage courbe 4, fixe par rapport à la pièce mobile 1.

Le capteur de débattement angulaire 2 porte un arbre de mesure 21 pivotant autour d'un axe de rotation Y sensiblement perpendiculaire à la direction de translation aller X+.

Ce capteur de débattement angulaire 2, de type connu en soi, permet de mesurer l'angle de pivotement de l'arbre de mesure 21, compté suivant un sens de rotation S, entre une position angulaire de départ A1 de l'arbre, et une position angulaire d'arrivée A2 de cet arbre.

La manivelle 3 est rendue solidaire en rotation de l'arbre de mesure 21 pour pouvoir pivoter autour de l'axe de rotation Y, et comporte un maneton 31 qui est engagé à coulissement dans la came 4.

Plus précisément, le maneton 31 est engagé dans la came 4 de façon à se trouver en un premier point 41 de la came 4 lorsque la pièce mobile 1 est dans sa première position longitudinale X1, et de façon à se trouver en un second point 42 de la came 4 lorsque la pièce mobile 1 est dans sa seconde position longitudinale X2.

Enfin, la came 4 se prolonge, parallèlement à la direction de translation de la pièce 1, mais dans le sens de la translation inverse X- de cette pièce, au moins jusqu'en un point extrême 43, qui est celui qu'occupe le maneton 31 lorsque la pièce mobile 1 adopte sa position longitudinale extrême X3.

Grâce à cet agencement, l'abscisse de la pièce mobile 1 peut être mesurée sur la course utile de cette pièce, qui s'étend de X1 à X2, et seulement sur cette course, bien que cette pièce soit autorisée à se déplacer sur une course plus longue, qui s'étend de X1 à X3.

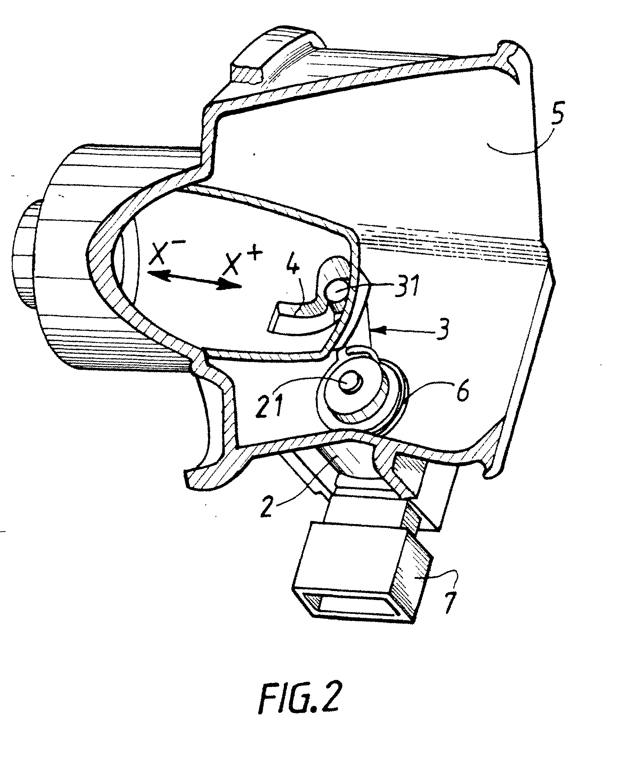

La Figure 2 illustre l'application du capteur de l'invention à la mesure du déplacement d'une pièce 1 liée au piston d'un maître-cylindre d'un circuit de freinage, enfermé dans un capot 5 auquel le capteur 2 est fixé.

Comme le montre cette figure, la manivelle 3 peut être sollicitée par un ressort hélicoïdal 6 prenant appui sur la capot 5, et permettant notamment d'améliorer le guidage du maneton 31 dans la came 4.

Un connecteur 7, destiné à permettre l'alimentation du capteur 2 et la lecture du signal électrique de mesure produit par ce dernier, est en outre relié au capteur 2 et au capot 5.

## Revendications

1. Capteur de déplacement propre à mesurer une course utile (X2-X1) effectuée par une pièce (1) mobile en translation entre une première position longitudinale (X1) correspondant à une première extrémité de la course utile, et une position longitudinale extrême (X3) éloignée de la première position longitudinale (X1) suivant une première direction axiale (X+) et située au-delà d'une seconde position longitudinale (X2) qui correspond à une seconde extrémité de la course utile, **caractérisé en ce qu'**il comprend : un capteur de débattement angulaire (2) portant un arbre de mesure (21) pivotant autour d'un axe de rotation (Y) sensiblement perpendiculaire à la première direction axiale (X+), ce capteur de débattement angulaire (2) étant propre à mesurer un angle (A2-A1) dont a pivoté l'arbre de mesure (21) depuis une première position angulaire (A1) jusqu'à une seconde position angulaire (A2) éloignée de la première suivant un premier sens-de rotation (S); une manivelle (3) rendue solidaire en rotation de l'arbre de mesure (21) pour pouvoir pivoter autour de l'axe de rotation (Y), cette manivelle (3) comportant un maneton (31) distant de l'axe de rotation (Y) et parallèle à lui; et une came de guidage courbe (4), fixe par rapport à la pièce mobile (1) et dans laquelle le maneton (31) est engagé à coulissement, le maneton (31) se trouvant en des premier et second points (41, 42) de la came (4) lorsque la pièce mobile (1) est respectivement dans ses première et seconde positions longitudinales (X1, X2), et la came (4) se prolongeant, parallèlement à une seconde direction axiale (X-) inverse de la première (X+), au moins jusqu'en un point extrême (43) qu'occupe le maneton (31) lorsque la pièce mobile (1) adopte sa position longitudinale extrême (X3).

## Patentansprüche

1. Wegsensor, der dazu geeignet ist, einen Betätigungsweg (X2-X1) zu messen, den ein Teil (1) zurücklegt, das zwischen einer ersten Längsposition (X1), die einem ersten Ende des Betätigungswegs entspricht, und einer Endlängsposition (X3) translatorisch bewegbar ist, welche gemäß einer ersten axialen Richtung (X+) von der ersten Längsposition (X1) beabstandet ist und sich jenseits einer zweiten Längsposition (X2) befindet, welche einem zweiten Ende des Betätigungswegs entspricht, **dadurch gekennzeichnet, dass** er folgendes aufweist: einen Sensor (2) zur Erfassung des Winkelausschlags, der eine Messwelle (21) trägt, die um eine Drehachse (Y) schwenkt, welche im Wesentlichen senkrecht zur ersten axialen Richtung (X+) verläuft, wobei dieser Sensor (2) zur Erfassung des Winkelausschlags dazu geeignet ist, einen Winkel (A2-A1) zu messen, um den die Messwelle (21) von einer ersten Winkelposition (A1) bis zu einer zweiten Winkelposition (A2), welche gemäß einer ersten Drehrichtung (S) von der ersten Winkelposition beabstandet ist, geschwenkt ist; eine Kurbel (3), die drehfest mit der Messwelle (21) verbunden ist, so dass sie um die Drehachse (Y) schwenken kann, wobei diese Kurbel (3) einen Kurbelzapfen (31) aufweist, der von der Drehachse (Y) beabstandet ist und parallel zu dieser verläuft; und eine gekrümmte Führungsbahn (4), die in Bezug auf das bewegliche Teil (1) fest ist und in der der Kurbelzapfen (31) gleitend in Eingriff ist, wobei sich der Kurbelzapfen (31) an einer ersten und an einer zweiten Stelle (41, 42) der Bahn (4) befindet, wenn das bewegliche Teil (1) in seiner ersten bzw. zweiten Längsposition (X1, X2) ist, und wobei sich die Bahn (4) parallel zu einer zweiten axialen Richtung (X-), die zur ersten axialen Richtung (X+) entgegengesetzt ist, mindestens bis zu einer Endstelle (43) erstreckt, die der Kurbelzapfen (31) einnimmt, wenn sich das bewegliche Teil (1) in seiner Endlängsposition (X3) befindet.

## Claims

1. Displacement transducer capable of measuring a useful travel (X2-X1) covered by a part (1) that can move in translation between a first longitudinal position (X1) corresponding to a first end of the useful travel, and an extreme longitudinal position (X3) away from the first longitudinal position (X1) in a first axial direction (X+) and situated beyond a second longitudinal position (X2) which corresponds to a second end of the useful travel, **characterized in that** it comprises: an angular-excursion sensor (2) carrying a measurement shaft (21) pivoting about an axis of rotation (Y) approximately perpendicular to the first axial direction (X+), this angular-excursion sensor (2) being capable of measuring an angle (A2-A1) through which the measurement shaft (21) has pivoted from a first angular position (A1) as far as a second angular position (A2) away from the first in a first direction of rotation (S); a crank (3) secured in terms of rotation to the measurement shaft (21) so as to be able to pivot about the axis of rotation (Y), this crank (3) comprising a wrist pin (31) distant from the axis of rotation (Y) and parallel to it; and a curved guide cam (4) which is fixed with respect to the moving part (1) and in which the wrist pin (31) is engaged with sliding, the wrist pin (31) finding itself at first and second points (41, 42) along the cam (4) when the moving part (1) is in its first and second longitudinal positions (X1, X2) respectively, and the cam (4) extending, parallel to a second axial direction (X-) the opposite of the first (X+), at least as far as an extreme point (43) that the wrist pin (31) occupies when the moving part (1) adopts its extreme longitudinal position (X3).
